# EUROPEAN PATENT APPLICATION

(11) **EP 2 530 665 A1**
(43) Date of publication of application: **05.12.2012**
(21) Application number: 11857421.9
(22) Date of filing: 07.07.2011
(51) Int. Cl.: G08G 1/00, G08G 1/0967, H04W 64/00

(54) **METHOD AND SYSTEM FOR ACQUIRING ROAD CONDITION INFORMATION IN REAL TIME**

(30) Priority: 23.03.2011 CN 201110070523
(71) Applicant: ZTE Corporation, Shenzhen, Guangdong 518057 (CN)
(72) Inventor: LIU, Jian, Shenzhen, Guangdong 518057 (CN); JIA, Xin, Shenzhen, Guangdong 518057 (CN)
(74) Representative: Waddington, Richard
(86) International application number: PCT/CN2011/076960
(87) International publication number: WO 2012/126224

(57) **Abstract**

The present invention discloses a method for acquiring road condition information in real time, including: after a videophone is established, a mobile terminal positioning and displaying a current location of a user; the mobile terminal calculating all road sections close to the current location for the user to choose, or calculating information of a next road section according to a formed route map and the current location; and the mobile terminal informing a mobile serving terminal of information of a road section selected by the user or the calculated information of the next road section. The present invention also discloses a system for acquiring the road condition information in real time. With the method and system, it can make a user select a road section required to be known conveniently and intuitively, and it is convenient for the user to view the traffic condition of the selected road section.

## Description

### Technical Field

The present invention relates to the traffic condition acquisition technology in wireless communication field, and particularly, to a method and system for acquiring road condition information in real time.

### Background of the Related Art

Currently, there are more and more vehicles in large and medium-sized cities such as Beijing, Shanghai, Shenzhen and so on, however, the speed of road construction often fails to keep up with the growth rate of the vehicles, thereby resulting in an increasingly common phenomenon of traffic jam in the urban road, which is more serious especially during the rush hour. Therefore, before people drive to a certain destination, if traffic conditions of the optional road sections can be informed in advance, the road sections in serious traffic jam can be avoid and routes in better traffic conditions can be selected for driving.

The related technical scheme has been disclosed in the related art to solve the situation of serious traffic jam, for example, a method and system of videophone for acquiring urban traffic condition in real time, and the implementation scheme is: establishing a communication interface between a mobile serving terminal and an urban traffic monitoring terminal, a mobile terminal calling the mobile serving terminal to establish a videophone; the mobile terminal selecting one road section to send to the mobile serving terminal in order to request and acquire traffic monitoring video data of the selected road section; and the mobile serving terminal acquiring the traffic monitoring video data of the road section selected by the mobile terminal from the urban traffic monitoring terminal and sending it to the mobile terminal in real time. Though the scheme can pertinently provide road condition information to a user in real time, following defects also exist:
1) the scheme requires a mobile terminal user to select one road section name manually to carry out transmission, and if the user is not familiar with the urban traffic condition, the road section name can not be known, and thus the road sections required to be known can not be selected.
2) if the user uses the scheme in the driving process, the process of selecting the road sections manually is not convenient enough, and selecting one road section needs to perform two menu selections manually, and if multiple road sections are required to be observed continuously, it is not convenient, and driving safety may also be influenced.
3) the method for selecting the road sections through menu is also not visualized enough, and clicking the road sections on the map can not be implemented.

### Summary of the Invention

In view of this, the main object of the present invention is to provide a method and system for acquiring road condition information in real time, which is convenient for a user to select a road section required to be known, and the selection method is visualized, and it is convenient for user to view the traffic condition of the selected road section.

In order to achieve the foregoing objects, the technical scheme of the present invention is implemented as follows.

The present invention provides a method for acquiring road condition information in real time, which comprises:
after a videophone is established, a mobile terminal positioning and displaying a current location of a user; the mobile terminal calculating all road sections close to the current location for the user to choose, or calculating information of a next road section according to a formed route map and the current location; and the mobile terminal informing a mobile serving terminal of information of a road section selected by the user or the calculated information of the next road section.

Wherein, positioning the current location of the user to display is:
the mobile terminal using a Cell ID, Time Difference of Arrival (TDOA) or Assisted Global Positioning System (A-GPS) positioning technology to determine the current location of the user, and displaying the current location of the user on a map of the mobile terminal.

Wherein, the mobile terminal calculating all the road sections close to the current location for the user to choose is:
after receiving information of all the road sections configured with cameras close to the current location sent by the mobile serving terminal, the mobile terminal displaying the road sections configured with cameras close to the current location to the user in a highlight form, and providing a point-and-click interface for the user.

Wherein, calculating the information of the next road section according to the formed route map and the current location is:
the mobile terminal automatically selecting one road section in a minimum distance to a corresponding route in the formed route map as the next road section of the current location from the road sections configured with cameras around the current location informed by the mobile serving terminal.

Wherein, the formed route map is: before the mobile terminal calls the mobile serving terminal, the user marking out a destination address on the map of the mobile terminal in advance, and the map automatically forming one driving route to be displayed on the map according to a start address and the destination address of the user.

The present invention further provides a system for acquiring road condition information in real time, which comprises an urban traffic monitoring terminal, and the system further comprises a mobile terminal and a mobile serving terminal; wherein,
the mobile serving terminal is configured to: receive information of a road section selected by a user sent by the mobile terminal, or receive information of a next road section calculated by the mobile terminal;
the mobile terminal is configured to: after a videophone is established, position and display a current location of the user; calculate all road sections close to the current location for the user to choose, or calculate the information of the next road section according to a formed route map and the current location; and inform the mobile serving terminal of the information of the road section selected by the user or calculated road section information.

Wherein, the mobile terminal further comprises: a positioning module, a road section processing module and a videophone module; wherein,
the positioning module is configured to: after the mobile terminal establishes the videophone, position the current location of the user, and inform the road section processing module of the positioned current location;
the road section processing module is configured to: display the current location of the user positioned by the positioning module, calculate all the road sections close to the current location for the user to choose, or calculate the information of the next road section according to the formed route map and the current location, and send the information of the road section selected by the user or the calculated information of the next road section to the videophone module; and
the videophone module is configured to: inform the mobile serving terminal of the information of the road section selected by the user or the calculated information of the next road section sent by the road section processing module.

Wherein, when the current location of the user is displayed, the road section processing module is configured to: display the current location of the user positioned by the positioning module on a map; and correspondingly, the road section processing module further stores the map.

The present invention further provides a mobile terminal, which comprises: a positioning module, a road section processing module and a videophone module; wherein,
the positioning module is configured to: after the mobile terminal establishes a videophone, position a current location of a user, and inform the road section processing module of the positioned current location;
the road section processing module is configured to: display the current location of the user positioned by the positioning module, calculate all road sections close to the current location for the user to choose, or calculate information of a next road section according to a formed route map and the current location, and send information of a road section selected by the user or the calculated information of the next road section to the videophone module; and
the videophone module is configured to: inform the mobile serving terminal of the information of the road section selected by the user or the calculated information of the next road section sent by the road section processing module.

With the method and system for acquiring road condition information in real time provided by the present invention, after the videophone is established, the mobile terminal positions and displays the current location of the user on the map; calculates all the road sections close to the current location for the user to choose, or calculates the information of the next road section according to the formed route map and current location; and informs the mobile serving terminal of the information of the road section selected by the user or the calculated road section information, so as to acquire traffic monitoring video data of the corresponding road sections. In the present invention, it makes the user click the road section required to be known intuitively and conveniently on a map interface displayed on the mobile terminal during the driving process, and the name of the road section is not required to be remembered, and multiple manual operations are also not required to be performed, thus the selection operation is simple. Therefore, the user can avoid road sections in serious traffic jam and select the best driving route, thereby enhancing the user experience. In addition, the road condition information received by the mobile terminal is provided by the urban traffic monitoring terminal in real time, thus better real-time, accuracy and intuition are possessed.

### Brief Description of Drawings

FIG. 1 is a schematic diagram of implementation flow of the method for acquiring road condition information in real time according to the present invention.
FIG. 2 is a schematic diagram of implementation flow of the method according to the example 1 in the present invention.
FIG. 3 is a schematic diagram of implementation flow of the method according to the example 2 in the present invention.
FIG. 4 is a structural schematic diagram of the system for acquiring road condition information in real time according to the present invention.
FIG. 5 is a schematic diagram of internal structure of the mobile terminal according to the present invention.

### Preferred Embodiments of the Present Invention

The basic idea of the present invention is that: after a videophone is established, a mobile terminal positions a current location of a user and displays the current location of the user on a map; the mobile terminal calculates all road sections close to the current location for the user to choose, or calculates information of a next road section according to a formed route map and the current location; and the mobile terminal informs a mobile serving terminal of information of a road section selected by the user or the calculated road section information, so as to acquire traffic monitoring video data of the corresponding road sections.

The present invention will be further described in detail in combination with the accompanying drawings and specific examples below.

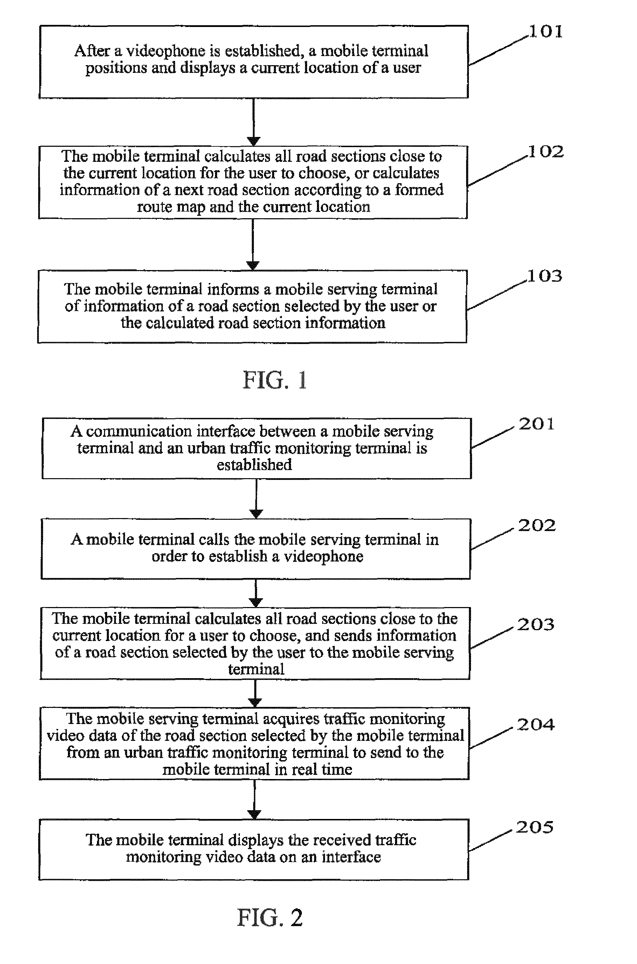

FIG. 1 is a schematic diagram of implementation flow of the method for acquiring road condition information in real time according to the present invention, and as shown in FIG. 1, the method includes following steps.

In step 101, after a videophone is established, a mobile terminal positions a current location of a user and displays the current location of the user on a map;

Specifically, a communication interface between a mobile serving terminal and an urban traffic monitoring terminal is established, and then the mobile terminal calls the mobile serving terminal, so as to establish the videophone. Here, the mobile terminal can call the mobile serving terminal by dialing a preset number in order to establish the videophone, and the above process is the related art, which will not be repeated here. After the videophone is established, the mobile terminal uses the existing positioning technology, such as Cell ID technology, TDOA technology or A-GPS technology and so on, to determine the current location of the user on a map and display the current location of the user on the map. For example, the current location of the mobile terminal on the map is determined according to GPS positioning information and displayed to a mobile terminal user through an interface. Wherein, the map is an urban traffic map stored in the mobile terminal, which is the related art.

The existing mobile terminal positioning technology will be described simply below.

Currently, the positioning technology applied to the mobile terminal mainly includes three kinds: the Cell ID technology, TDOA technology or A-GPS technology, and the positioning accuracy thereof is at least 200m, 50-200m and 5-50m respectively.

In the TDOA technology, by detecting downlink pilot signals of different base stations, time of arrival of downlink pilot frequency in different base stations is obtained, that is, the so-called pilot phase measurement, and the location of the mobile terminal can be positioned according to a result of the measurement in combination with coordinates of the base stations by using a location estimation algorithm.

In the Cell ID technology, the location of the mobile terminal is determined according to the ID number of a cell of origin in which the mobile terminal is located, and after the mobile terminal registers in the current cell, a corresponding Cell ID will exist in the network. For a system stores geographic location information of the cell, the system can acquire location information of the mobile terminal through the Cell ID, and send the obtained urban information where the cell is located after the positioning to the mobile terminal. The implementation method of the Cell ID technology includes following steps.
1) the mobile terminal initiates a request to a location service platform, and the location service platform performs authentication;
2) after the mobile terminal passes the authentication, the location service platform requests a Home Location Register (HLR) to which the mobile terminal belongs for visited location information;
3) the HLR sends the current visited location information of the mobile terminal to the location service platform;
4) the location service platform sends a positioning request to a Mobile Switching Center (MSC)/Servicing GPRS Support Node (SGSN) and requests to perform positioning on the mobile terminal according to the visited location information.
5) the MSC/SGSN performs positioning on the mobile terminal.
   Here, the MSC/SGSN can initiate paging to the mobile terminal if necessary, so as to update the cell in which the mobile terminal is located.
6) after the positioning is finished, the MSC/SGSN returns the location information to the location service platform.
7) the location service platform then returns the location information to the mobile terminal.

In the A-GPS technology, the mobile terminal is positioned according to the network base station information in combination with the GPS information. Specifically, the mobile terminal transmits location information data of GPS to a network side, and a positioning server of the network side performs location calculation, and meanwhile, the network side performs transmission to the mobile terminal according to auxiliary data generated by a reference network of the GPS such as difference correction data and satellite motion state and so on, and finds out an approximate location of the mobile terminal from a data base to transmit it to the mobile terminal. If the A-GPS technology is used to acquire the urban traffic information, when GPS positioning is initiated, cell information of base stations close to the mobile terminal is acquired firstly, and then the information is transmitted to a GPS server through the network; and according to the approximate location of the mobile terminal, the GPS server transmits GPS auxiliary information related to the location, including an ephemeris of the GPS and an azimuth pitch angle and so on, to the mobile terminal, and acquires the located urban road section information ultimately through the location information where the mobile terminal is located.

For the positioning accuracy of the A-GPS technology is relatively high, the A-GPS technology is preferably used as the mobile terminal positioning technology in the present invention.

In step 102, the mobile terminal calculates all road sections close to the current location for the user to choose, or calculates information of a next road section according to a formed route map and the current location.

Specifically, the mobile terminal displays the road sections configured with cameras close to the current location to the user in a highlight form, and the mobile terminal provides one point-and-click interface for the user, and makes the user select an appropriate road section on the map displayed by the interface as required. For example, the mobile terminal marks the road section of the current location, e.g. a numerical marker 3, which is sent to the mobile serving terminal, and the mobile serving terminal returns markers of all the road sections configured with cameras around the road section-3, such as the road section-2, road section-6 and road section-5, to the mobile terminal after receiving the numerical marker 3, and the mobile terminal highlights all the road sections configured with cameras on the map for the user to choose after receiving them.

Or, before the mobile terminal calls the mobile serving terminal, the mobile terminal user can mark out a destination address on the map in advance, and the map automatically forms one driving route to be displayed on the map according to a start address and the destination address of the user, and the forming process of the route map is the related art. Afterwards, the mobile terminal automatically selects one road section most close to a corresponding route in the formed route map from the road sections configured with cameras around the current location, that is, the road section in a minimum distance to the formed route is taken as the next road section of the current location.

In the present invention, the calculation process of the mobile terminal is the intercommunication process between the mobile terminal and mobile serving terminal. At the moment, the mobile serving terminal can update the information in the map of the mobile terminal in real time, and provide the information of the road sections configured with cameras around the current location to the mobile terminal, that is, the mobile terminal informs the mobile serving terminal of the current location, and the mobile serving terminal is requested to inform the mobile terminal of the information of all the road sections configured with cameras around the current location, namely the road section markers. That process is the related art, which will not be described in detail here.

Here, the user will appropriately change the driving route according to traffic monitoring video data fed back by the mobile serving terminal, that is, the user will select the road section in a better road condition during the driving process, therefore, there is a certain deviation between the current location and the route map formed by the map previously, and one road section closest to the route map needs to be selected as the next road section of the current location.

In step 103, the mobile terminal informs the mobile serving terminal of information of a road section selected by the user or the calculated road section information.

Specifically, the mobile terminal sends the related information, namely the road section markers, of the road section clicked by the user to the mobile serving terminal in the form of videophone; or the mobile terminal sends the marker of the next road section closest to the route map to the mobile serving terminal in the form of videophone, so as to acquire the traffic monitoring video data of the corresponding road sections.

After step 103 in the present invention, the mobile serving terminal sends the received road section information to the urban traffic monitoring terminal; the urban traffic monitoring terminal sends the traffic monitoring video data collected at each road section to the mobile serving terminal in real time through the monitoring cameras configured by the road sections correspondingly; and the mobile serving terminal forwards the traffic monitoring video data to the mobile terminal in real time in the form of videophone.

Wherein, the traffic monitoring video data are actual road condition images collected by the cameras.

The method of the present invention will be described in detail in combination with two specific examples below.

### Example 1

In the example, a mobile terminal sends information of the road section which is clicked by a user through an interface to a mobile serving terminal, and the specific flow is as shown in FIG. 2, and following steps are included.

In step 201, a communication interface between the mobile serving terminal and an urban traffic monitoring terminal is established.

In step 202, the mobile terminal calls the mobile serving terminal in order to establish a videophone.

Here, the mobile terminal can call the mobile serving terminal by dialing one preset number.

In step 203, the mobile terminal calculates all road sections close to the current location for the user to choose, and sends the information of the road section selected by the user to the mobile serving terminal.

Specifically, the mobile terminal calculates all the road sections close to the current location through a GPS, and displays the road sections on the interface for the user to choose, and the user clicks a certain road section on the interface, and then the mobile terminal sends the related information of the road section selected by the user to the mobile serving terminal, so as to request and acquire traffic monitoring video data of the road section.

Here, each road section displayed on the interface of the mobile terminal can be marked by using different numbers, such as road section-0, road section-3 and road section-9 and so on, and thus, the mobile terminal can send a number corresponding to the corresponding road section to the mobile serving terminal, which is convenient for the mobile terminal to communicate with the mobile serving terminal.

In step 204, the mobile serving terminal acquires the traffic monitoring video data of the road section selected by the mobile terminal from an urban traffic monitoring terminal to send it to the mobile terminal in real time.

In step 205, the mobile terminal displays the received traffic monitoring video data on an interface.

### Example 2

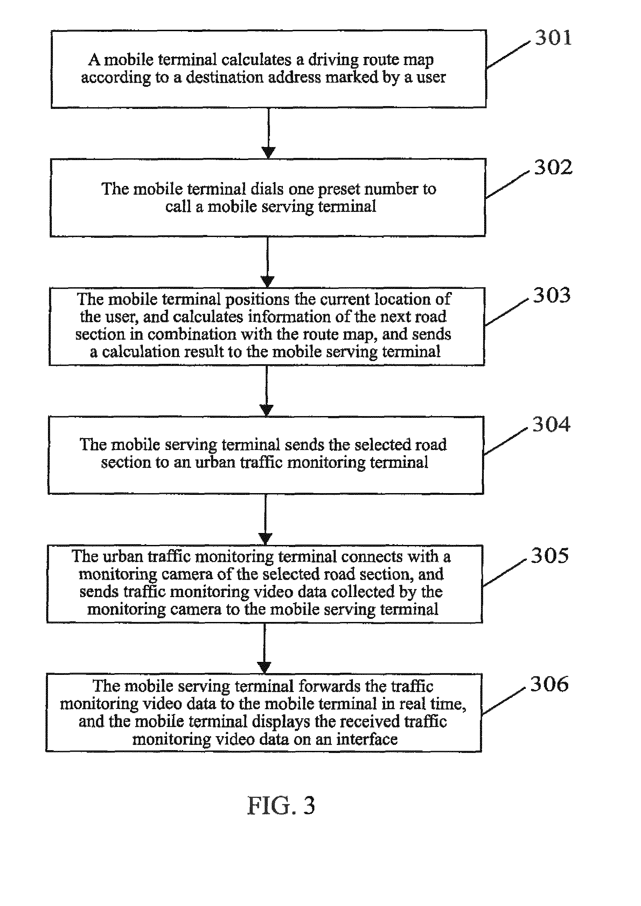

In the example, when a user is in the urban rush hour or other situations of traffic jam, the user marks out a destination address on an urban traffic map displayed by a mobile terminal in advance, and the specific flow is as shown in FIG. 3, and following steps are included.

In step 301, the mobile terminal calculates a driving route map according to the destination address marked by the user.

In step 302, the mobile terminal dials one preset number to call a mobile serving terminal.

Here, it is assumed that a communication interface between the mobile serving terminal and an urban traffic monitoring terminal has been established; and the mobile serving terminal establishes a videophone with the mobile terminal according to the existing videophone standard.

In step 303, the mobile terminal positions the current location of the user, and calculates information of the next road section in combination with the route map, and sends a calculation result to the mobile serving terminal.

Specifically, after positioning the current location of the user through the A-GPS technology, the mobile terminal calculates the information of the next road section in combination with the calculated route map, and sends it to the mobile serving terminal through a videophone message. The route can be marked with digits.

In step 304, the mobile serving terminal sends the selected road section to the urban traffic monitoring terminal.

In step 305, the urban traffic monitoring terminal connects with a monitoring camera of the selected road section, and it sends traffic monitoring video data collected by the monitoring camera to the mobile serving terminal.

Specifically, after receiving the related information of the road section sent by the mobile serving terminal, the urban traffic monitoring terminal connects with the monitoring camera configured by the selected road section, and sends the traffic monitoring video data collected by the monitoring camera to the mobile serving terminal in real time.

In step 306, the mobile serving terminal forwards the traffic monitoring video data to the mobile terminal in real time, and the mobile terminal displays the received traffic monitoring video data on the interface.

Therefore, the mobile terminal user can acquire traffic condition of the required road sections in real time, which provides help for his/her driving out, and also contributes to easing urban traffic.

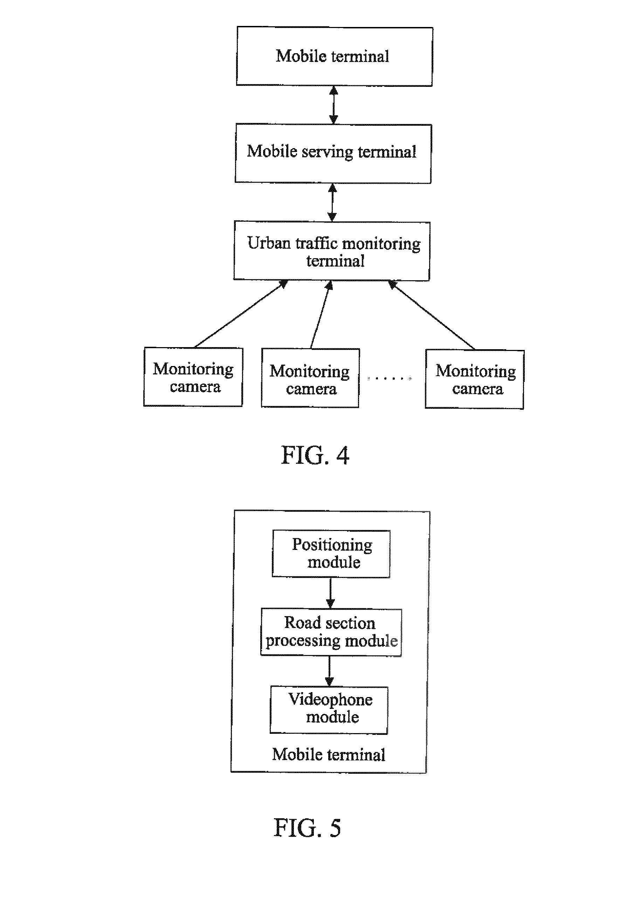

FIG. 4 is a structural schematic diagram of the system for acquiring road condition information in real time according to the present invention, and as shown in FIG. 4, a mobile terminal, a mobile serving terminal and an urban traffic monitoring terminal are included, wherein, functions of the urban traffic monitoring terminal are identical with that in the related art.

Firstly the functions of the urban traffic monitoring terminal are simply introduced.

The urban traffic monitoring terminal is configured to: according to information of a road section selected by a user which is sent by the mobile serving terminal, collect traffic monitoring video data shot by a monitoring camera configured by the corresponding road section in real time, and return the collected traffic monitoring video data to the mobile serving terminal in real time.

The urban traffic monitoring terminal is generally controlled by the urban traffic department and linked with a number of monitoring cameras, and the monitoring cameras are installed at different road sections in the city, such as main street, bridge and crossing of the city and so on, and each monitoring camera collects the shot traffic monitoring video data of the present road section and converge them to the urban traffic monitoring terminal, which can be provided for the traffic management staff to use.

The mobile serving terminal is configured to: receive the information of the road section selected by the user which is sent by the mobile terminal or receive information of a next road section calculated by the mobile terminal, and send the received road section information to the urban traffic monitoring terminal, and forward the traffic monitoring video data returned by the urban traffic monitoring terminal to the mobile terminal in real time.

The mobile serving terminal is required to have established a communication interface with the urban traffic monitoring terminal, and it sends the traffic monitoring video data to the mobile terminal in real time in the form of videophone.

The mobile terminal is configured to: after a videophone is established, position and display the current location of the user; calculate all road sections close to the current location for the user to choose, or calculate the information of the next road section according to a formed route map and the current location, and inform the mobile serving terminal of the information of the road section selected by the user or the calculated road section information.

The mobile terminal is preferably a 3rd Generation mobile communication technology (3G) mobile terminal, which includes devices such as a display screen and a camera and so on.

As shown in FIG.5, the mobile terminal further includes: a positioning module, a road section processing module and a videophone module; wherein,
the positioning module is configured to: after the mobile terminal establishes the videophone, position the current location of the user, and inform the road section processing module of the positioned current location;
the road section processing module is configured to: display the current location of the user positioned by the positioning module, and calculate all the road sections close to the current location for the user to choose or calculate the information of the next road section according to the formed route map and the current location, and send the information of the road section selected by the user or the calculated information of the next road section to the videophone module; and
the videophone module is configured to: inform the mobile serving terminal of the information of the road section selected by the user or the calculated information of the next road section, which is sent by the road section processing module.

The videophone module is a processing module in the existing mobile terminal, and it can send the road section information to the mobile serving terminal by invoking an H.245 interface.

Wherein, the road section processing module displaying the current location of the user is: the road section processing module displays the positioned current location of the user on a map; and correspondingly, the map is stored in the road section processing module.

The present invention also provides a mobile terminal, and as shown in FIG. 5, a positioning module, a road section processing module and a videophone module are included; wherein,
the positioning module is configured to: after the mobile terminal establishes a videophone, position a current location of a user, and inform the road section processing module of the positioned current location;
the road section processing module is configured to: display the current location of the user positioned by the positioning module, calculate all road sections close to the current location for the user to choose or calculate information of a next road section according to a formed route map and the current location, and send information of a road section selected by the user or the calculated information of the next road section to the videophone module; and
the videophone module is configured to: inform the mobile serving terminal of the information of the road section selected by the user or the calculated information of the next road section, which is sent by the road section processing module.

The above description is only the preferred examples of the present invention, which is not used to limit the protection scope of the present invention.

## Claims

1. A method for acquiring road condition information in real time, comprising:
after a videophone is established, a mobile terminal positioning and displaying a current location of a user; the mobile terminal calculating all road sections close to the current location for the user to choose or calculating information of a next road section according to a formed route map and the current location; and the mobile terminal informing a mobile serving terminal of information of a road section selected by the user or the calculated information of the next road section.

2. The method for acquiring road condition information in real time according to claim 1, wherein, the step of positioning and displaying the current location of the user is:
the mobile terminal using a Cell ID, Time Difference of Arrival (TDOA) or Assisted Global Positioning System (A-GPS) positioning technology to determine the current location of the user, and displaying the current location of the user on a map of the mobile terminal.

3. The method for acquiring road condition information in real time according to claim 1 or 2, wherein, the step of the mobile terminal calculating all the road sections close to the current location for the user to choose is:
after receiving information of all road sections configured with cameras close to the current location sent by the mobile serving terminal, the mobile terminal displaying the road sections configured with cameras close to the current location to the user in a highlight form, and providing a point-and-click interface for the user.

4. The method for acquiring road condition information in real time according to claim 1 or 2, wherein, the step of calculating the information of the next road section according to the formed route map and the current location is:
the mobile terminal automatically selecting one road section in a minimum distance to a corresponding route in the formed route map as the next road section of the current location from road sections configured with cameras around the current location informed by the mobile serving terminal.

5. The method for acquiring road condition information in real time according to claim 4, wherein, the formed route map is: before the mobile terminal calls the mobile serving terminal, the user marking out a destination address on a map of the mobile terminal in advance, and the map automatically forming one driving route to be displayed on the map according to a start address and the destination address of the user.

6. A system for acquiring road condition information in real time, comprising an urban traffic monitoring terminal, and further comprising a mobile terminal and a mobile serving terminal; wherein,
the mobile serving terminal is configured to: receive information of a road section selected by a user which is sent by the mobile terminal, or receive information of a next road section calculated by the mobile terminal;
the mobile terminal is configured to: after a videophone is established, position and display a current location of the user; calculate all road sections close to the current location for the user to choose, or calculate the information of the next road section according to a formed route map and the current location, and inform the mobile serving terminal of the information of the road section selected by the user or calculated road section information.

7. The system for acquiring road condition information in real time according to claim 6, wherein, the mobile terminal further comprises: a positioning module, a road section processing module and a videophone module; wherein,
the positioning module is configured to: after the mobile terminal establishes the videophone, position the current location of the user, and inform the road section processing module of the positioned current location;
the road section processing module is configured to: display the current location of the user positioned by the positioning module, calculate all the road sections close to the current location for the user to choose or calculate the information of the next road section according to the formed route map and the current location, and send the information of the road section selected by the user or the calculated information of the next road section to the videophone module; and
the videophone module is configured to: inform the mobile serving terminal of the information of the road section selected by the user or the calculated information of the next road section sent by the road section processing module.

8. The system for acquiring road condition information in real time according to claim 7, wherein, when the current location of the user is displayed, the road section processing module is configured to: display the current location of the user which has been positioned by the positioning module on a map; and correspondingly, the road section processing module further stores the map.

9. A mobile terminal, comprising: a positioning module, a road section processing module and a videophone module; wherein,
the positioning module is configured to: after the mobile terminal establishes a videophone, position a current location of a user, and inform the road section processing module of the positioned current location;
the road section processing module is configured to: display the current location of the user positioned by the positioning module, and calculate all road sections close to the current location for the user to choose or calculate information of a next road section according to a formed route map and the current location, and send information of a road section selected by the user or the calculated information of the next road section to the videophone module; and
the videophone module is configured to: inform a mobile serving terminal of the information of the road section selected by the user or the calculated information of the next road section sent by the road section processing module.
